# EUROPEAN PATENT SPECIFICATION

(11) **EP 2 371 669 B1**
(45) Date of publication and mention of the grant of the patent: **24.06.2015**
(21) Application number: 11157886.0
(22) Date of filing: 11.03.2011
(51) Int. Cl.: B62B 5/00

(54) **motorized cart for transporting chairs**
motorisierter Wagen zum Transport von Stühlen
chariot motorisé pour le transport des chaises

(30) Priority: 24.03.2010 IT RE20100024
(43) Date of publication of application: 05.10.2011
(73) Proprietor: Acha S.r.L., 40137 Bologna (IT)
(72) Inventor: Bonfiglioli, Giancarlo, 40137, BOLOGNA (IT)
(74) Representative: Corradini, Corrado

(56) References cited:
- EP-A2- 1 506 902
- WO-A2-2007/095538
- AU-A- 5 948 369
- CH-A- 234 907
- US-A- 6 109 644
- US-A1- 2003 201 619
- US-A1- 2006 097 468

## Description

The invention relates to auxiliary transport means for disabled persons, which are used for small movements.

The above means are constituted by wheelchairs comprising a seat with arms, provided with two large idle wheels located below the seat and at least a pirouetting small wheel located anteriorly below a footplate forward of the chair for receiving the user's feet.

The two wheels are accessible to the user, who can manually activate them to cause the chair to move along the desired direction.

The known means are not only very expensive, they are also unwieldy and difficult to transport from one place to another when the user is transported by other means.

Further, the known mean are aesthetically not attractive and are often a source of embarrassment for the user.

Document AU 5948369 A shows a carriage for transporting a chair, comprising four seatings and a footplate.

Other transportation means are known from the prior art, such as for example the transportation dollies described in the patent applications US2003/0201619, US6109644 and WO2007/095538.

These dollies are generally capable of transporting any kind of load but they are not conceived for a comfortable transportation of persons, especially disabled persons.

Moreover, using these known universal transportation dollies for transporting a person would certainly increase the embarrassment of the transported person itself.

The aim of the invention is to obviate the above-described drawbacks with a solution which is simple and relatively economical.

The set aim is attained by a carriage having the characteristics recited in the independent claim.

The dependent claims recite further characteristics destined to improve the positives and advantages provided by the invention.

The advantages and constructional and functional characteristics of the invention will more clearly emerge from the detailed description that follows, which, with the aid of the figures of the accompanying tables of drawings, illustrates a preferred embodiment of the invention, given by way of non-limiting example.
Figure 1 illustrates the invention in a lateral view.
Figure 2 illustrates the invention seen from behind.
Figure 3 illustrates the invention in plan view in a first configuration thereof.
Figure 4 illustrates the invention in plan view in a second configuration thereof.

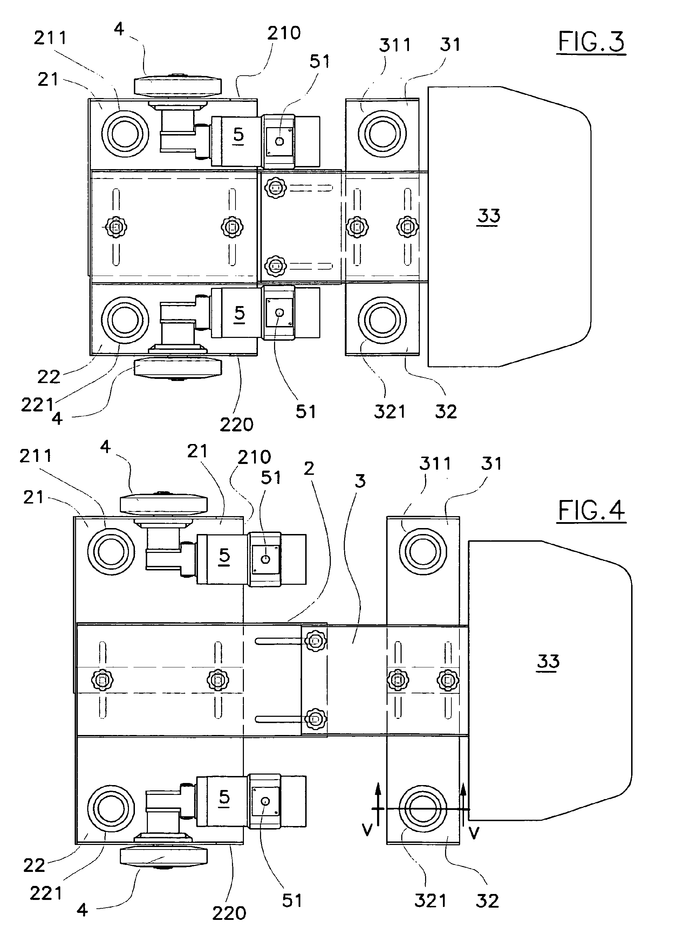

The figures illustrate the carriage comprising a base frame 1, comprising a first plate 2 and a second plate 3 (figure 4).

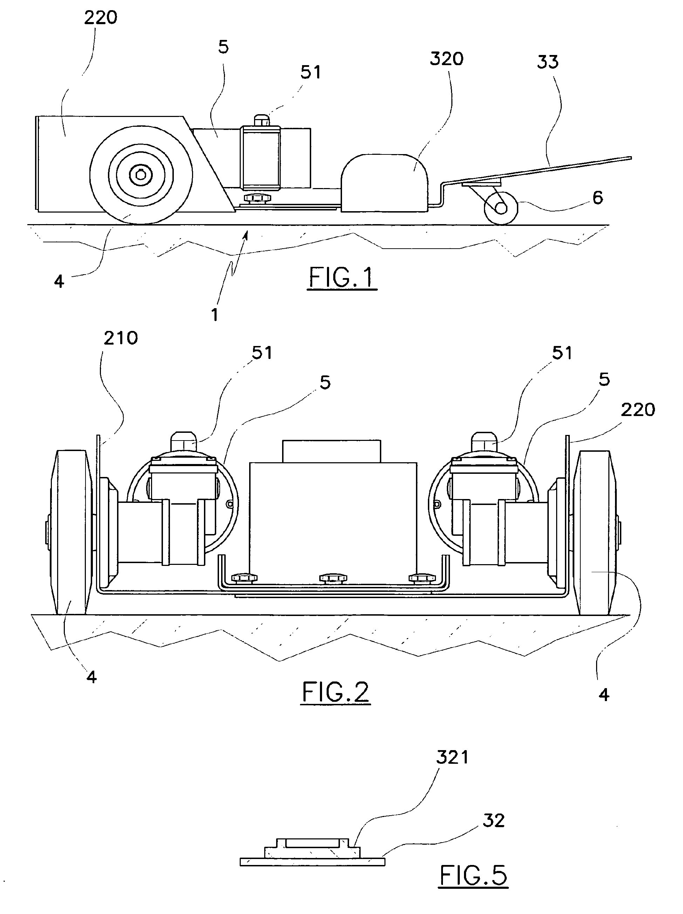

Two small frames 21 and 22 are symmetrically fixed on the first plate 2, which frames 21 and 22 can take on the retracted position illustrated in figures 1, 2 and 3, and the extended position illustrated in figure 4.

The second plate 3 is fixed on the first plate 2, slidably in the direction of movement, the second plate 3 being able to assume the retracted position illustrated in figures 1 and 3, and the extended position illustrated in figure 4, and each intermediate position.

Two small frames 31 and 32 are fixed on the second plate 3, symmetrically slidable in a perpendicular direction to the advancing direction, which two small frames 31 and 32 can take on the retracted position illustrated in figure 3, and the extended position illustrated in figure 4, and every intermediate position. The figures do not illustrate in detail the slidable constraint means between the plates and between each plate and the respective frames, as they are all well known to the expert in the field.

The small frames 21, 22, 31 and 32 comprise a raised lateral wall, respectively 210, 220, 310 and 320 with protection functions.

The plate 3 extends frontally into a footplate 33 inclined upwardly, with a foot-resting function.

Each of the small frames 21 and 22 is provided with a wheel 4, associated to an electro-hydraulic motor 5, which superiorly exhibits an activating button 51.

The electric motor plant and the relative battery are not illustrated as they are of usual type.

An idle pirouetting wheel 6 is located at the centre of and below the footplate 33.

A seating, respectively 211, 221, 311 and 321 is located in proximity of and internally of each of the lateral walls 210, 220, 310 and 320. The seating 211, 221, 311 and 321 is destined to receive the leg of a common seat or chair, not illustrated; means are provided for fixing the chair-leg, not illustrated, for example in the form of straps or other mechanical means which are easily realisable by the skilled technician.

Thus a self-propelling carriage is realised, having an adjustable wheel-base and gauge, for receiving a common seat or chair, and a footplate 33, with a foot-resting function for a person sat on the said seat or chair.

Thanks to the above-described self-propelling carriage, all of the aims of the invention are attained.

The carriage exhibits small plan dimensions, in the order of the dimensions taken up by the overlying seat or chair, and contained height dimensions, and can therefore be easily transported independently of the seat or chair.

The user can thus choose any seat or chair that she or he desires, suitable for all occasions, and can move using other transport means from one place to another without needing to worry about taking the specific seat or chair with her or him.

For example, according to need, the carriage can receive a special office seat, or a particularly comfortable chair suitable for use while reading, or even a specific seat for sitting at table, identical to the seats of the other diners, or a specific seat such as those used in restaurants, or even a garden or terrace chair.

While seated on the seat or chair chosen for the particular occasion, the user can move unlaboriously along a plane, and can move freely internally of rooms in which she or he resides or works, or wherever she or he happens to be.

In any situation, the user will suffer no embarrassment from having to sit in a seat or chair that is different from the ones the others are sitting on.

The invention is not limited to the above-described example, and variants and improvements can be brought to it without its forsaking the ambit of the following claims.

## Claims

1. A self-propelling carriage comprising a base frame (1) provided with two wheels (4), each coupled to an electro-hydraulic motor (5), and a small pirouetting wheel (6), wherein it comprises four seatings (211, 221, 311, 321), each designed to receive a foot of a common seat or chair, and fastening means thereof, wherein it further comprises a footplate (33), with a foot-resting function for a person sat on the said seat or chair, **characterized in that** each electro-hydraulic motor (5) superiorly exhibits an activating button (51).

2. The carriage of claim 1, **characterised in that** the base frame (1) comprises two independent plates (2, 3), slidable and adjustable with respect to one another in a movement direction, each of the plates (2, 3) comprising a pair of small frames (21, 22, 31, 32) which are slidable and adjustable in a perpendicular direction to the movement direction, each small frame (21, 22, 31, 32) bearing a housing seating (211, 221, 311, 321) of a foot of a seat or chair; the motorised wheels (5) being fixed to a pair (21, 22) of the small frames.

3. The carriage of claim 1, **characterised in that** a gauge between the motorised wheels (5) is adjustable.

4. The carriage of claim 1, **characterised in that** a step between the motorised wheels (5) and the pirouetting wheel (6) is adjustable.

## Patentansprüche

1. Fahrgestell mit Eigenantrieb, ein Grundgestell (1) umfassend, das mit zwei Rädern (4), von denen jedes mit einem Hydraulikelektromotor (5) gekoppelt ist, und einem kleinen schwenkbaren Rad (6) ausgestattet ist, wobei das Fahrgestell vier Aufnahmen (211, 221, 311, 321), die jeweils dafür gestaltet sind, ein Bein eines gewöhnlichen Sitzes oder Stuhls aufzunehmen, und Befestigungsmittel dafür umfasst, wobei es ferner eine Fußplatte (33) mit einer Fußabstellfunktion für eine Person umfasst, die auf dem Sitz oder Stuhl sitzt, **dadurch gekennzeichnet, dass** jeder Hydraulikelektromotor (5) an seiner Oberseite einen Betätigungsschalter (51) aufweist.

2. Fahrgestell nach Anspruch 1, **dadurch gekennzeichnet, dass** das Grundgestell (1) zwei unabhängige Platten (2, 3) umfasst, die im Verhältnis zueinander in eine Bewegungsrichtung gleitfähig und einstellbar sind, wobei jede der Platten (2, 3) ein Paar kleiner Gestelle (21, 22, 31, 32) umfasst, die senkrecht zur Bewegungsrichtung gleitfähig und einstellbar sind, wobei jedes kleine Gestell (21, 22, 31, 32) eine Aufnahme(211, 221, 311, 321) umfasst, um einen Fuß eines Sitzes oder Stuhles unterzubringen, wobei die motorbetriebenen Räder (5) an einem Paar (21, 22) der kleinen Gestelle befestigt sind.

3. Fahrgestell nach Anspruch 1, **dadurch gekennzeichnet, dass** zwischen den motorbetriebenen Rädern (5) eine Spurweite einstellbar ist.

4. Fahrgestell nach Anspruch 1, **dadurch gekennzeichnet, dass** zwischen den motorbetriebenen Rädern (5) und dem schwenkbaren Rad (6) ein Abstand einstellbar ist.

## Revendications

1. Chariot autopropulsé comprenant un châssis de base (1) pourvu de deux roues (4), couplées chacune à un moteur électrohydraulique (5), et d'une petite roue pivotante (6), dans lequel il comprend quatre logements (211, 221, 311, 321) conçus pour recevoir chacun un pied d'un siège ou d'une chaise de modèle courant, et un moyen de fixation correspondant, dans lequel il comprend en outre une plate-forme (33) ayant une fonction de repose-pied pour une personne assise sur ledit siège ou ladite chaise, **caractérisé en ce que** chaque moteur électrohydraulique (5) présente supérieurement un bouton d'activation (51).

2. Chariot selon la revendication 1, **caractérisé en ce que** le châssis de base (1) comprend deux plaques indépendantes (2, 3), coulissantes et ajustables l'une par rapport à l'autre en direction du déplacement, chacune des plaques (2, 3) comprenant une paire de petits châssis (21, 22, 31, 32) qui sont coulissants et ajustables dans une direction perpendiculaire à la direction du déplacement, chaque petit châssis (21, 22, 31, 32) portant un logement de bâti (211, 221, 311, 321) d'un pied de siège ou de chaise ; les roues motorisées (5) étant fixées à une paire de petits châssis (21, 22).

3. Chariot selon la revendication 1, **caractérisé en ce qu'**un écartement entre les roues motorisées (5) est ajustable.

4. Chariot selon la revendication 1, **caractérisé en ce qu'**un pas entre les roues motorisées (5) et la roue pivotante (6) est ajustable.
